(19) Europäisches Patentamt
European Patent Office
Office européen des brevets

(11) Publication number: **0 334 042 B1**

(12) # EUROPEAN PATENT SPECIFICATION

(45) Date of publication of patent specification: **18.11.93** (51) Int. Cl.5: **C08C 19/42**

(21) Application number: **89103120.5**

(22) Date of filing: **23.02.89**

(54) **Modified diene polymer rubbers.**

(30) Priority: **25.02.88 JP 43777/88**
**25.02.88 JP 43778/88**
**26.02.88 JP 44859/88**
**26.02.88 JP 44860/88**

(43) Date of publication of application:
**27.09.89 Bulletin 89/39**

(45) Publication of the grant of the patent:
**18.11.93 Bulletin 93/46**

(84) Designated Contracting States:
**DE FR GB NL**

(56) References cited:
**EP-A- 0 150 479**
**US-A- 3 244 664**
**US-A- 4 148 838**

(73) Proprietor: **SUMITOMO CHEMICAL COMPANY, LIMITED**
**Kitahama 4-chome 5-33**
**Chuo-ku Osaka 541(JP)**

(72) Inventor: **Imai, Akio**
**17-10, Aobadai 3-chome**
**Ichihara-shi Chiba-ken(JP)**
Inventor: **Seki, Tomoaki**
**135, Iriyamazu**
**Ichihara-shi Chiba-ken(JP)**

(74) Representative: **Türk, Gille, Hrabal, Leifert**
**Brucknerstrasse 20**
**D-40593 Düsseldorf (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

## Description

The present invention relates to modified diene polymers, a process for preparing the same and rubber compositions containing the same which provide modified diene polymer rubbers having an improved impact resilience and a low hardness at low temperatures.

Conjugated diene polmers such as polybutadiene and a styrene-butadiene copolymer have hitherto been used as rubbers for automobile tire treads. In recent years, from the viewpoint of demands in low fuel cost for automobiles and in running safety on snow and ice roads, rubber materials having a low rolling resistance and a large grip force on ice and snow roads have been desired as rubbers for automobile tire treads.

The rolling resistance is correlative to the impact resilience of polymers. The rolling resistance is decreased with increasing the impact resilience. On the other hand, it is known that the grip force on snow and ice roads is correlative to the hardness at low temperatures, and that the smaller the hardness at low temperatures, the larger the grip force on snow and ice roads. Known rubber materials are not satisfactory in these properties for practical use.

This also applies to the modified polymers of conjugated dienes and vulcanizable rubber compositions containing the modified polymers as described in EP-A-0 150 479.

Therefore, it is an object of the present invention to provide modified conjugated diene polymers and modified conjugated diene rubber compositions capable of providing a cured product having an improved impact resilience and a low hardness at low temperatures.

It has now been found that according to the present invention the above object can be achieved by reacting an alkali metal-containing diene polymer with a particular compound as a modifier to thereby introduce a particular atomic group into the diene polymer.

According to a first aspect the present invention relates to a modified diene polymer obtained by reacting an alkali metal-containing conjugated diene polymer with an acrylamide compound of general formula (1):

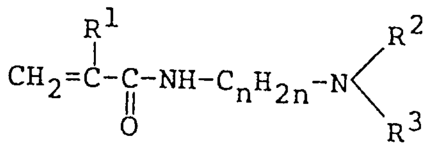

(1)

wherein $R^1$ is a hydrogen atom or methyl group, $R^2$ and $R^3$ are an alkyl group, and n is an integer,
said alkali metal-containing conjugated diene polymer being a living polymer having an alkali metal end prepared by a polymerization of a conjugated diene monomer or a mixture of a conjugated diene monomer and an aromatic vinyl monomer in a hydrocarbon solvent in the presence of an alkali metal-based catalyst, or a polymer to which an alkali metal is introduced by an addition reaction of a diene polymer having conjugated diene units in the polymer chain and an alkali metal-based catalyst in a hydrocarbon solvent.

According to a preferred embodiment of the invention said acrylamide compound is used in an amount of 0,05 to 10 moles per mole of said alkali metal-based catalyst used in the preparation of said alkali metal-containing conjugated diene polymer.

According to a further preferred embodiment of the present invention the modified diene polymer as claimed has a Mooney viscosity ($ML_{1-4}$ 100 °C) of 10 to 200.

According to another preferred embodiment of the present invention said acrylamide compound of formula (1) is used in admixture with an aminovinylsilane compound of general formula (2):

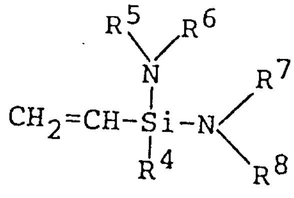

(2)

wherein $R^4$, $R^5$, $R^6$, $R^7$ and $R^8$ are an alkyl group.

According to a second aspect the present invention relates to a process for preparing a modified diene polymer which comprises reacting an alkali metal-containing conjugated diene polymer with an acrylamide compound of general formula (1) as a modifier

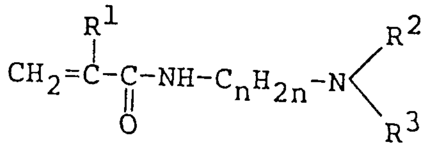

(1)

wherein $R^1$ is a hydrogen atom or methyl group, $R^2$ and $R^3$ are an alkyl group, and n is an integer,
said alkali metal-containing conjugated diene polymer being a living polymer having an alkali metal end prepared by a polymerization of a conjugated diene monomer or a mixture of a conjugated diene monomer and an aromatic vinyl monomer in a hydrocarbon solvent in the presence of an alkali metal-based catalyst, or a polymer to which an alkali metal is introduced by an addition reaction of a diene polymer having conjugated diene units in the polymer chain and an alkali metal-based catalyst in a hydrocarbon solvent.

According to preferred embodiments of the claimed process said modifier is used in an amount of 0,05 to 10 moles per mole of said alkali metal-based catalyst used in the preparation of said alkali metal-containing conjugated diene polymer.

The used alkali metal-based catalyst preferably is a member selected from the group consisting of an alkali metal, an alkali metal hydrocarbon compound and a complex of an alkali metal with a polar compound.

The alkali metal-containing conjugated diene polymer is preferably in the form of a solution in a hydrocarbon solvent.

The reaction of the alkali metal-containing conjugated diene polymer and the modifier preferably is carried out at a temperature of from room temperature to 100 ° C.

According to a further preferred embodiment of the claimed process said acrylamide compound of formula (1) is used in admixture with an aminovinylsilane compound of the formula (2) as defined above.

According to a third aspect the present invention relates to a rubber composition having an improved impact resilience and a low hardness at low temperatures comprising a rubber component containing at least 10 % by weight of a modified diene polymer, said modified diene polymer being a conjugated diene polymer modified by reacting an alkali metal-containing conjugated diene polymer selected from the group consisting of a living polymer having an active metal end and an alkali metal addition product of a conjugated diene polymer with an acrylamide compound of the formula (1) as a modifier:

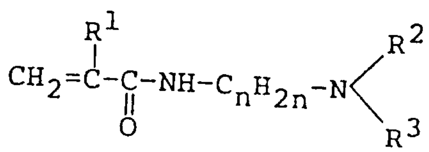

(1)

wherein $R^1$ is a hydrogen atom or methyl group, $R^2$ and $R^3$ are an alkyl group, and n is an integer.

According to a preferred embodiment of the invention said modified diene polymer is the modification product of a conjugated diene polymer selected from the group consisting of a butadiene rubber, a polyisoprene rubber, a butadiene-isoprene copolymer rubber, a styrene-butadiene copolymer rubber, a polypentadiene rubber, and a butadiene-piperylene copolymer rubber.

Said modified diene polymer preferably is used in combination with a rubber selected from the group consisting of an emulsion-polymerized styrene-butadiene copolymer, a solution-polymerized polybutadiene, a solution-polymerized styrene-butadiene copolymer, a solution-polymerized poly isoprene, a solution-polymerized butadiene-isoprene copolymer, and natural rubber.

Said modified diene polymer contained in the rubber composition as described above preferably has a Mooney viscosity ($ML_{1-4}$ 100 ° C) of 10 to 200.

According to a further preferred embodiment of the claimed rubber composition the acrylamide compound of formula (1) is used in admixture with an aminovinylsilane compound of the formula (2) as defined above.

The term "alkali metal-containing conjugated diene polymer" as used herein means a diene polymer wherein an alkali metal is bonded to the diene polymer end or ends, obtained by polymerizing a conjugated diene monomer or a mixture of the diene monomer and other monomers copolymerizable with the diene monomer in the presence of an alkali metal-based catalyst; and a diene polymer obtained by addition of an alkali metal to a diene polymer having units of a conjugated diene in the polymer chain which has been previously prepared without being bound to the polymerization method, for example, by a solution polymerization method or an emulsion polymerization method.

The diene polymers used in the present invention include, for instance, homopolymers or copolymers of conjugated diene monomers such as 1,3-butadiene, isoprene, 1,3-pentadiene (piperylene), 2,3-dimethyl-1,3-butadiene, 1-phenyl-1,3-butadiene and 1,3-hexadiene, and copolymers of the conjugated diene monomers and other monomers copolymerizable therewith, e.g. aromatic vinyl compounds such as styrene, m- or p-methylstyrene, p-t-butylstyrene, α-methylstyrene, vinyltoluene, vinylnapthalene, divinylbenzene, trivinylbenzene and divinylnaphthalene; unsaturated nitrile compounds such as acrylonitrile; acrylic acid esters and methacrylic acid esters; and vinylpyridine. Representative examples of the diene polymers are, for ... instance, polybutadiene rubber, polyisoprene rubber, butadiene-isoprene copolymer and butadiene-styrene copolymer.

The diene polymer wherein an alkali metal is bonded to the diene polymer end or ends is, as mentioned above, those obtained by a polymerization using an alkali metal-based catalyst, and is a living polymer having an alkali metal on at least one end of the polymer chain in the stage prior to terminating the polymerization. For instance, the living diene polymer can be prepared by a known living anionic polymerization method wherein monomer or monomers are polymerized in the presence of an alkali metal-based catalyst such as an organolithium initiator in a hydrocarbon solvent. Generally used chemicals such as alkali metal-based catalysts, polymerization solvents, randomizers and controlling agents for the microstructure of conjugated diene units can be used in the preparation of the living diene polymers. The polymerization manner is not particularly limited.

The alkali metal addition diene polymer is prepared from diene polymers obtained by polymerizing the conjugated diene monomer or a mixture thereof with other copolymerizable monomers in a usual polymerization manner, e.g. a solution polymerization using an alkali metal-based catalyst, an alkaline earth metal-based catalyst or a Ziegler catalyst, or an emulsion polymerization using a redox catalyst. Representative examples of the starting diene polymers are, for instance, polybutadiene rubber, polyisoprene rubber, butadiene-styrene copolymer rubber, butadiene-isoprene copolymer rubber, polypentadiene rubber, butadiene-piperylene copolymer rubber, and butadiene-propylene alternate copolymer. An alkali metal is introduced to the diene polymers by an addition reaction of the diene polymers and alkali metal-based catalysts.

The addition of the alkali metal to the diene polymers is carried out by usually adopted methods. For instance, the diene polymer is reacted with a usual alkali metal-based catalyst in a hydrocarbon solvent in the presence of a polar compound such as an ether compound, an amine compound or a phosphine compound at a temperature of 30° to 100°C for tens of minutes to tens of hours, especially 10 minutes to 60 hours. The amount of the alkali metal-based catalyst is usually from 0.1 to 10 millimoles per 100 g of the diene polymer. When the amount is less than 0.1 millimole, the impact resilience is not improved. When the amount is more than 10 millimoles, a side reaction such as crosslinking or severance of the polymer occurs, thus resulting in no contribution to improvement of impact resilience. The amount of the polar solvent is usually from 0.1 to 10 moles, preferably from 0.5 to 2 moles, per mole of the alkali metal-based catalyst.

The alkali metal-based catalyst used in the living polymerization and the addition reaction includes, alkali metals for instance, alkali metals such as lithium, sodium, potassium, rubidium and cesium, hydrocarbon compounds of these metals, and complexes of these metals with polar compounds.

Lithium or sodium compounds having 2 to 20 carbon atoms are preferable as the catalyst. Representative examples thereof are, for instance, ethyllithium, n-propyllithium, iso-propyllithium, n-butyllithium, sec-butyllithium, t-octyllithium, n-decyllithium, phenyllithium, 2-naphthyllithium, 2-butyl-phenyllithium, 4-phenyl-butyllithium, cyclohexyllithium, 4-cyclopentyllithium, 1,4-dilithio-butene-2, sodium naphthalene, sodium biphenyl, potassium-tetrahydrofuran complex, potassium diethoxyethane complex, and sodium salt of α-methylstyrene tetramer. The catalysts may be used alone or as an admixture thereof.

The polymerization reaction and the alkali metal addition reaction for preparing the alkali metal-containing conjugated diene polymers are carried out in a hydrocarbon solvent, or in a solvent which does not destroy the alkali metal-based catalysts, e.g. tetrahydrofuran, tetrahydropyran or dioxane.

The hydrocarbon solvent is suitably selected from aliphatic hydrocarbons, aromatic hydrocarbons and alicyclic hydrocarbons. Hydrocarbons having 2 to 12 carbon atoms are particularly preferred as the solvent.

Preferable examples of the solvent are, for instance, propane, n-butane, iso-butane, n-pentane, iso-pentane, n-hexane, cyclohexane, propene, 1-butene, iso-butene, trans-2-butene, cis-2-butene, 1-pentene, 2-pentene, 1-hexene, 2-hexene, benzene, toluene, xylene, and ethylbenzene. The solvents may be used alone or as an admixture thereof.

The alkali metal-containing diene polymer prepared by the living polymerization or the addition reaction is reacted with an acrylamide compound of general formula (1) as a modifier;

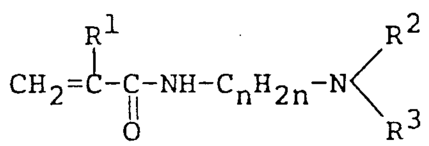

(1)

wherein $R^1$ is hydrogen atom or methyl group, $R^2$ and $R^3$ are an alkyl group, especially an alkyl group having 1 to 4 carbon atoms, and n is an integer, preferably an integer of 2 to 5, optionally in admixture with an aminovinylsilane compound of the general formula (2):

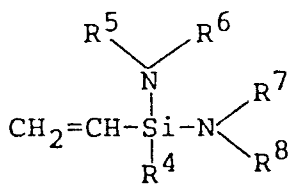

(2)

wherein $R^4$, $R^5$, $R^6$, $R^7$ and $R^8$ are an alkyl group, especially an alkyl group having 2 to 5 carbon atoms.

Representative examples of the acrylamide compound (1) are, for instance, N,N-dimethylaminomethyl acrylamide, N,N-ethylmethylaminomethyl acrylamide, N,N-diethylaminomethyl acrylamide, N,N-ethylpropylaminomethyl acrylamide, N,N-dipropylaminomethyl acrylamide, N,N-butylpropylaminomethyl acrylamide, N,N-dibutylaminomethyl acrylamide, N,N-dimethylaminoethyl acrylamide, N,N-ethylmethylaminoethyl acrylamide, N,N-diethylaminoethyl acrylamide, N,N-ethylpropylaminoethyl acrylamide, N,N-dipropylaminoethyl acrylamide, N,N-butylpropylaminoethyl acrylamide, N,N-dibutylaminoethyl acrylamide, N,N-dimethylaminopropyl acrylamide, N,N-ethylmethylaminopropyl acrylamide, N,N-diethylaminopropyl acrylamide, N,N-ethylpropylaminopropyl acrylamide, N,N-dipropylaminopropyl acrylamide, N,N-butylpropylaminopropyl acrylamide, N,N-dibuthylaminopropyl acrylamide, N,N-dimethylaminobutyl acrylamide, N,N-ethylmethylaminobuthyl acrylamide, N,N-diethylaminobutyl acrylamide, N,N-ethylpropylaminobuthyl acrylamide, N,N-dipropylaminobutyl acrylamide, N,N-butylpropylaminobutyl acrylamide, N,N-dibutylaminobutyl acrylamide and the corresponding methacrylamide compounds. N,N-dimethylaminopropyl acrylamide and methacrylamide are particularly preferred.

Representative examples of the aminovinylsilane compound (2) which can be used in admixture with the acrylamide compound of formula (1), are, for instance bis(dimethylamino)methylvinylsilane, bis-(ethylmethylamino)methylvinylsilane, bis(diethylamino)methylvinylsilane, bis(ethylpropyl)methylvinylsilane, bis(dipropylamino)methylvinylsilane, bis(butylpropylamino)methylvinylsilane, bis(dibutylamino)-methylvinylsilane, bis(dimethylamino)ethylvinylsilane, bis(ethylmethylamino)ethylvinylsilane, bis-(diethylamino)ethylvinylsilane, bis(ethylpropylamino)ethylvinylsilane, bis(dipropylamino)ethylvinylsilane, bis-(butylpropylamino)ethylvinylsilane, bis(dibutylamino)ethylvinylsilane, bis(dimethylamino)propylvinylsilane, bis(ethylmethylamino)propylvinylsilane, bis(diethylamino)propylvinylsilane, bis(ethylpropylamino)-propylvinylsilane, bis(dipropylamino)propylvinylsilane, bis(butylpropylamino)propylvinylsilane, bis-(dibutylamino)propylvinylsilane, bis(dimethylamino)butylvinylsilane, bis(ethylmethylamino)butylvinylsilane, bis(diethylamino)butylvinylsilane, bis(ethylpropylamino)butylvinylsilane, bis(dipropylamino)butylvinylsilane, bis(butylpropylamino)butylvinylsilane, bis(dibutylamino)butylvinylsilane, and the like. Bis(dimethylamino)-methylvinylsilane is particularly preferred.

The amount of the modifier is usually from 0.05 to 10 moles, preferably 0.2 to 2 moles, per mole of the alkali metal-based catalyst used in the living polymerization or alkali metal addition reaction for the production of the alkali metal-containing diene polymers.

The reaction between the modifier and the alkali metal-containing diene polymer proceeds rapidly. Accordingly, the reaction temperature and the reaction time can be selected from the wide ranges. In

general, the reaction is effected at a temperature of from room temperature to 100 °C for several seconds to several hours (about 3 seconds to about 6 hours).

Contacting the alkali metal-containing diene polymer with the modifier is sufficient for the reaction. Usually, the alkali metal-containing diene polymer dissolved in a solvent is mixed with the modifier. For instance, the modification of diene polymers is conducted by a process wherein monomer or monomers are polymerized in a hydrocarbon solvent using an alkali metal-based catalyst, and to the resulting polymer solution is added a prescribed amount of the modifier; or a process wherein a diene polymer solution is subjected to the alkali metal addition reaction, and after the completion of the addition reaction, the modifier is subsequently added to the reaction mixture and the reaction is effected. However, the process for reacting the polymer with the modifier is not limited to these processes.

Thus, the acrylamide compound (1) optionally in admixture with the aminovinylsilane compound (2) is introduced to the polymer chain end or into the polymer chain.

After the completion of the reaction, the modified diene polymer is coagulated from the reaction mixture (solution) by known methods as applied in the preparation of rubbers by a usual solution polymerization, for example, by an addition of a coagulant to the reaction mixture or by a steam coagulation. The coagulation temperature is not particularly limited.

The drying of the polymer crumbs separated from the reaction system can also be effected by usual methods as used in the preparation of usual synthetic rubbers, for example, by a band dryer or a dryer of extrusion type. The drying temperature is not particularly limited.

The modified conjugated diene polymers according to the present invention have an improved impact resilience and an improved hardness at low temperatures as compared with nonmodified diene polymers. Accordingly, the modified diene polymers are particularly suitable for use in automobile tires. Further, they can also be used as raw material rubbers for various industrial purposes such as boot and shoe bottom, floor material and vibration-proof rubber. The modified diene polymers can be incorporated with usual rubber additives to provide a rubber composition and cured in a usual manner to provide cured products.

The modified diene polymer according to the present invention may be used alone or in combination with other known rubbers. Examples of the other rubbers are, for instance, emulsion-polymerized styrene-butadiene copolymer, rubbers prepared by solution polymerization using an anionic polymerization catalyst, a Ziegler catalyst, e.g. polybutadiene rubber, styrene-butadiene copolymer rubber, polyisoprene rubber and butadiene-isoprene copolymer rubber, and natural rubber. One or more of these rubbers are selected according to the purposes.

It is necessary that the rubber component contains at least 10 % by weight, preferably at least 20 % by weight, of the modified diene polymer. When the amount of the modified diene polymer is less than 10 % by weight, the improvement in the impact resilience cannot be expected.

The Mooney viscosity ($ML_{1+4}$ 100 °C) of the modified diene polymer is usually from 10 to 200, preferably from 20 to 150. When the Mooney viscosity is less than 10, the mechanical properties such as tensile strength are poor. When the Mooney viscosity is more than 200, the processability or workability is lowered since the compatibility with other rubbers is poor, and consequently the mechanical properties of the cured rubbers are lowered.

All or a part of the rubber component may be used as an oil extended rubber.

The rubber composition of the present invention is prepared by mixing the rubber component with various additives using a mixing machine such as a roll mill or a Banbury mixer. The additives used are not particularly limited, and are selected from additives usually used in the rubber industry, e.g. a curing system using sulfur, stearic acid, zinc oxide, a curing accelerator such as thiazole accelerator, thiuram accelerator or sulfenamide accelerator, and/or an organic peroxide; a reinforcing agent such as HAF carbon black, ISAF carbon black or other various grades of carbon blacks, or silica; a filler such as calcium carbontate or talc; and other additives such as process oil, processing assistant and antioxidant. The kinds and amounts of the rubber additives to be used are selected according to the purposes of the rubber composition, and are not particularly limited in the present invention.

The present invention is more specifically described and explained by means of the following Examples in which all percents and parts are by weight unless otherwise noted.

Example 1

(Preparation of modified diene polymer)

A 10 liter stainless steel polymerization vessel was washed, dried and replaced with nitrogen, and it was charged with 850 g of 1,3-butadiene, 150 g of styrene, 4,300 g of n-hexane, 9 g of tetrahydrofuran and 4.4

millimoles of n-butyllithium dissolved in n-hexane. The polymerization was carried out at 50 °C for 1 hour with stirring.

After the completion of the polymerization, 4.4 millimoles of N,N-dimethylaminopropyl acrylamide was added to the reaction mixture. After conducting the reaction for 30 minutes with stirring, 10 mℓ of methanol was added to the reaction mixture and the mixture was further stirred for 5 minutes.

The reaction mixture was then taken out from the vessel. To the reaction mixture was added 5 g of 2,6-di-t-butyl-p-cresol (commercially available under the trade mark "Sumilizer" BHT made by Sumitomo Chemical Co,, Ltd.), and a large portion of n-hexane was evaporated followed by drying under reduced pressure at 60 °C for 24 hours.

The Mooney viscosity, the styrene content and the content of 1,2-bonding units (hereinafter referred to as "vinyl content") of the obtained elastomeric polymer were measured. The styrene content was measured by a refractive index method. The vinyl content was measured according to infrared spectrophotometry.

The produced polymer had a Mooney viscosity of 55, a styrene content of 15 % and a vinyl content of 31 %.

(Preparation of compounded rubber and physical properties of cured rubber)

A compounded rubber was prepared by mixing the obtained polymer with rubber additives on mixing rolls according to the recipe shown in Table 1. It was then press-cured at 160 °C for 30 minutes.

The impact resilience (rebound resilience) of the cured rubber was measured at 60 °C using a Lüpke resilience tester. The hardness (JIS A hardness) of the cured rubber was measured at -20 °C according to JIS K 6301.

The results are shown in Table 2.

Table 1

| Ingredients | parts |
|---|---|
| Polymer | 100 |
| HAF carbon black*1 | 50 |
| Aromatic oil*2 | 10 |
| Zinc oxide | 5 |
| Stearic acid | 2 |
| Curing accelerator*3 | 2 |
| Sulfur | 1.5 |

(notes) *1 N-339

*2 Aromatic oil having a flow point of 27°C

*3 N-cyclohexyl-2-benzothiazylsulfenamide

Comparative Example 1

The procedure of Example 1 was repeated except that N,N-dimethylaminopropyl acrylamide was not used.

The produced elastomeric polymer had a Mooney viscosity of 55, a styrene content of 15 % and a vinyl content of 31 %.

The results of the measurement of properties of the cured products prepared in the same manner as in Example 1 from the polymers obtained in Comparative Example 1 are shown in Table 2.

Table 2

| | Modifier | Mooney viscosity | Impact resilience (%) | JIS hardness |
|---|---|---|---|---|
| Example 1 | N,N-dimethylaminopropyl acrylamide | 55 | 67 | 70 |
| Com.Ex. 1 | - | 55 | 62 | 73 |

From the results shown in Table 2, it is understood that the polymers prepared according to the present invention have a high impact resilience and a low hardness at low temperatures as compared with the polymers prepared in the same manner except for no use of the modifier and the polymers prepared so as to have the same Mooney viscosity without using the modifier.

In addition to the ingredients used in the Examples, other ingredients can be used in the Examples as set forth in the specification to obtain substantially the same results.

## Claims

1. A modified diene polymer obtained by reacting an alkali metal-containing conjugated diene polymer with an acrylamide compound of general formula (1):

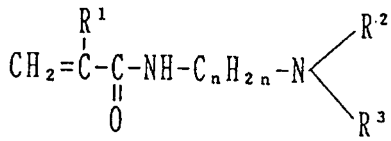

(1)

wherein $R^1$ is hydrogen atom or methyl group, $R^2$ and $R^3$ are an alkyl group, and n is an integer, said alkali metal-containing conjugated diene polymer being a living polymer having an alkali metal end prepared by a polymerization of a conjugated diene monomer or a mixture of a conjugated diene monomer and an aromatic vinyl monomer in a hydrocarbon solvent in the presence of an alkali metal-based catalyst, or a polymer to which an alkali metal is introduced by an addition reaction of a diene polymer having conjugated diene units in the polymer chain and an alkali metal-based catalyst in a hydrocarbon solvent.

2. The modified diene polymer of Claim 1, wherein said acrylamide compound is used in an amount of 0.05 to 10 moles per mole of said alkali metal-based catalyst used in the preparation of said alkali metal-containing conjugated diene polymer.

3. The modified diene polymer of Claim 1, which has a Mooney viscosity ($ML_{1+4}$ 100 °C) of 10 to 200.

4. The modified diene polymer of any of claims 1 to 3, wherein said acrylamide compound of formula (1) is used in admixture with an aminovinylsilane compound of general formula (2)

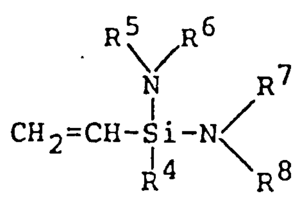

(2)

wherein $R^4$, $R^5$, $R^6$, $R^7$ and $R^8$ are an alkyl group.

5. A process for preparing a modified diene polymer of claim 1 which comprises reacting an alkali metal-containing conjugated diene polymer with an acrylamide compound of general formula (1) as a modifier:

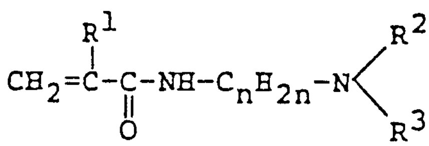

(1)

wherein $R^1$ is hydrogen atom or methyl group, $R^2$ and $R^3$ are an alkyl group, and n is an integer,
said alkali metal-containing conjugated diene polymer being a living polymer having an alkali metal end prepared by a polymerization of a conjugated diene monomer or a mixture of a conjugated diene

monomer and an aromatic vinyl monomer in a hydrocarbon solvent in the presence of an alkali metal-based catalyst, or a polymer to which an alkali metal is introduced by an addition reaction of a diene polymer having conjugated diene units in the polymer chain and an alkali metal-based catalyst in a hydrocarbon solvent.

**6.** The process of Claim 5, wherein said modifier is used in an amount of 0.05 to 10 moles per mole of said alkali metal-based catalyst used in the preparation of said alkali metal-containing conjugated diene polymer.

**7.** The process of Claim 5, wherein said alkali metal-based catalyst is a member selected from the group consisting of an alkali metal, an alkali metal hydrocarbon compound and a complex of an alkali metal with a polar compound.

**8.** The process of Claim 5, wherein said alkali metal-containing conjugated diene polymer is in the form of a solution in a hydrocarbon solvent.

**9.** The process of Claim 5, wherein the reaction of the alkali metal-containing conjugated diene polymer and the modifier is carried out at a temperature of from room temperature to 100 °C.

**10.** The process of any of claims 5 to 9, wherein said acrylamide compound of formula (1) is used in admixture with an aminovinylsilane compound of general formula (2):

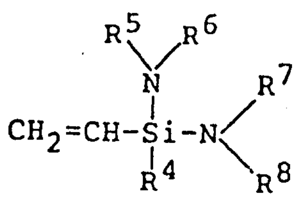

(2)

wherein $R^4$, $R^5$, $R^6$, $R^7$ and $R^8$ are an alkyl group.

**11.** A rubber composition comprising a rubber component containing at least 10 % by weight of a modified diene polymer of claim 1, said modified diene polymer being a conjugated diene polymer modified by reacting an alkali metal-containing conjugated diene polymer selected from the group consisting of a living polymer having an alkali metal end and an alkali metal addition product of a conjugated diene polymer with an acrylamide compound of general formula (1) as a modifier:

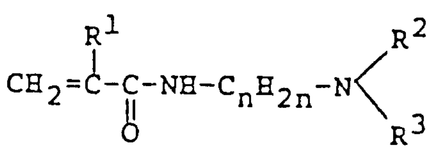

(1)

wherein $R^1$ is hydrogen atom or methyl group, $R^2$ and $R^3$ are an alkyl group, and n is an integer.

**12.** The composition of Claim 11, wherein said modified diene polymer is the modification product of a conjugated diene polymer selected from the group consisting of a polybutadiene rubber, a polyisoprene rubber, a butadiene-isoprene copolymer rubber, a styrene-butadiene copolymer rubber, a polypentadiene rubber, and a butadiene-piperylene copolymer rubber.

**13.** The composition of Claim 11, wherein said modified diene polymer is used in combination with a rubber selected from the group consisting of an emulsion-polymerized styrene-butadiene copolymer, a solution-polymerized polybutadiene, a solution-polymerized styrene-butadiene copolymer, a solution-polymerized polyisoprene, a solution-polymerized butadiene-isoprene copolymer, and natural rubber.

**14.** The composition of Claim 11, wherein said modified diene polymer has a Mooney viscosity ($ML_{1+4}$ 100 °C) of 10 to 200.

**15.** The composition of any of claims 11 to 14, wherein said acrylamide compound of formula (1) is used in admixture with an aminovinylsilane compound of general formula (2):

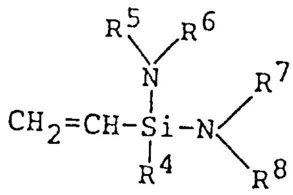

(2)

wherein $R^4$, $R^5$, $R^6$, $R^7$ and $R^8$ are an alkyl group.

**Patentansprüche**

**1.** Modifiziertes Dienpolymer, hergestellt durch Umsetzung eines Alkalimetall-enthaltenden konjugierten Dienpolymers mit einer Acrylamidverbindung der allgemeinen Formel (1):

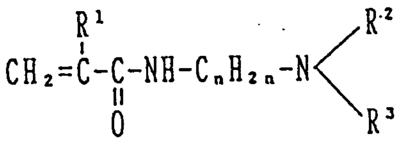

(1)

worin $R^1$ steht für ein Wasserstoffatom oder eine Methylgruppe, $R^2$ und $R^3$ stehen für eine Alkylgruppe und n steht für eine ganze Zahl,
wobei es sich bei dem Alkalimetall-enthaltenden konjugierten Dienpolymer handelt um ein lebendes Polymer mit einem Alkalimetall-Ende, hergestellt durch Polymerisation eines konjugierten Dienmonomers oder einer Mischung aus einem konjugierten Dienmonomer und einem aromatischen Vinylmonomer in einem Kohlenwasserstofflösungsmittel in Gegenwart eines Katalysators auf Alkalimetall-Basis oder um ein Polymer, in das ein Alkalimetall eingeführt worden ist durch eine Additionsreaktion zwischen einem Dienpolymer mit konjugierten Dien-Einheiten in der Polymerkette und einem Katalysator auf Alkalimetall-Basis in einem Kohlenwasserstofflösungsmittel.

**2.** Modifiziertes Dienpolymer nach Anspruch 1, worin die Acrylamidverbindung in einer Menge von 0,05 bis 10 mol pro mol des Katalystors auf Alkalimetall-Basis, wie er bei der Herstellung dieses Alkalimetall-enthaltenden konjugierten Dienpolymers eingesetzt worden ist, verwendet wird.

**3.** Modifiziertes Dienpolymer nach Anspruch 1, das eine Mooney-Viskosität ($ML_{1+4}$ 100 °C) von 10 bis 200 aufweist.

**4.** Modifiziertes Dienpolymer nach einem der Ansprüche 1 bis 3, worin die Acrylamidverbindung der Formel (1) im Gemisch mit einer Aminovinylsilanverbindung der allgemeinen Formel (2) verwendet wird

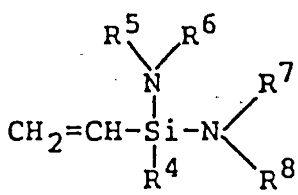

(2)

worin $R^4$, $R^5$, $R^6$, $R^7$ und $R^8$ für eine Alkylgruppe stehen.

5. Verfahren zur Herstellung eines modifizierten Dienpolymers nach Anspruch 1, das umfaßt die Umsetzung eines Alkalimetall-enthaltenden konjugierten Dienpolymers mit einer Acrylamidverbindung der allgemeinen Formel (1) als Modifizierungsmittel:

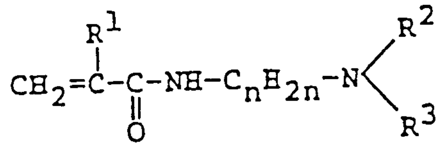

(1)

worin $R^1$ für ein Wasserstoffatom oder eine Methylgruppe steht, $R^2$ und $R^3$ für eine Alkylgruppe steht und n für eine ganze Zahl steht,
wobei es sich bei dem Alkalimetall-enthaltenden konjugierten Dienpolymer handelt um ein lebendes Polymer mit einem Alkalimetall-Ende, hergestellt durch Polymerisation eines konjugierten Dienmonomers oder einer Mischung aus einem konjugierten Dienmonomer und einem aromatischen Vinylmonomer in einem Kohlenwasserstofflösungsmittel in Gegenwart eines Katalysators auf Alkalimetall-Basis, oder um ein Polymer, in das ein Alkalimetall eingeführt worden ist durch eine Additionsreaktion zwischen einem Dienpolymer mit konjugierten Dieneinheiten in der Polymerkette und einem Katalysator auf Alkalimetall-Basis in einem Kohlenwasserstofflösungsmittel.

6. Verfahren nach Anspruch 5, worin das Modifizierungsmittel in einer Menge von 0,05 bis 10 mol pro mol des Katalysator auf Alkalimetall-Basis, wie er bei der Herstellung dieses Alkalimetall-enthaltenden konjugierten Dienpolymers eingesetzt worden ist, verwendet wird.

7. Verfahren nach Anspruch 5, worin der Katalysator auf Akalimetall-Basis ein Vertreter ist, der ausgewählt wird aus der Gruppe, die besteht aus einem Alkalimetall, einer Alkalimetall-Kohlenwasserstoff-Verbindung und einem Komplex eines Alkalimetalls mit einer polaren Verbindung.

8. Verfahren nach Anspruch 5, worin das Alkalimetall-enthaltende konjugierte Dienpolymer in Form einer Lösung in einem Kohlenwasserstofflösungsmittel vorliegt.

9. Verfahren nach Anspruch 5, worin die Umsetzung zwischen dem Alkalimetall-enthaltenden konjugierten Dienpolymer und dem Modifizierungsmitteln bei einer Temperatur von Raumtemperatur bis 100 °C durchgeführt wird.

10. Verfahren nach einem der Ansprüche 5 bis 9, worin die Acrylamidverbindung der Formel (1) im Gemisch mit einer Aminovinylsilanverbindung der allgemeinen Formel (2) verwendet wird:

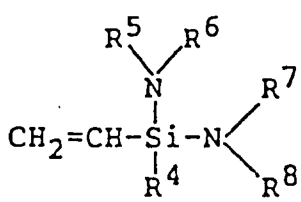

(2)

worin $R^4$, $R^5$, $R^6$, $R^7$ und $R^8$ für eine Alkylgruppe stehen.

11. Kautschuk-Zusammensetzung, die umfaßt eine Kautschukkomponente, die mindestens 10 Gewichtsprozent eines modifizierten Dienpolymers nach Anspruch 1 enthält, wobei das modifizierte Dienpolymer ein konjugiertes Dienpolymer ist, das modifiziert worden ist durch Umsetzung eines Alkalimetallenthaltenden konjugierten Dienpolymers, ausgewählt aus der Gruppe, die besteht aus einem lebenden Polymer mit einem Alkalimetall-Ende und einem Alkalimetall-Additionsprodukt eines konjugierten Dienpolymers mit einer Acrylamidverbindung der allgemeinen Formel (1) als Modifizierungsmittel:

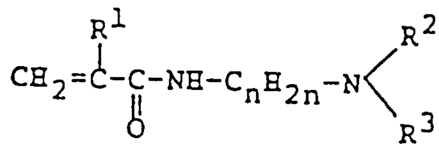

(1)

worin $R^1$ für ein Wasserstoffatom oder eine Methylgruppe, $R^2$ und $R^3$ für eine Alkylgruppe und n für eine ganze Zahl stehen.

**12.** Zusammensetzung nach Anspruch 11, worin das modifizierte Dienpolymer das Modifikationsprodukt eines konjugierten Dienpolymers darstellt, ausgewählt aus der Gruppe, die besteht aus einem Polybutadien-Kautschuk, einem Polyisopren-Kautschuk, einem Butadien/Isopren-Copolymer-Kautschuk, einem Styrol-Butadien-Copolymer-Kautschuk, einem Polypentadien-Kautschuk und einem Butadien/PiperylenCopolymer-Kautschuk.

**13.** Zusammensetzung nach Anspruch 11, worin das modifizierte Dienpolymer in Kombination mit einem Kautschuk verwendet wird, der ausgewählt wird aus der Gruppe, die besteht aus einem emulsionspolymerisierten Styrol/Butadien-Copolymer, einem lösungspolymerisierten Polybutadien, einem lösungspolymerisierten Styrol/Butadien-Copolymer, einem lösungspolymerisierten Polyisopren, einem lösungspolymerisierten Butadien-Isopren-Copolymer und Naturkautschuk.

**14.** Zusammensetzung nach Anspruch 11, worin das modifizierte Dienpolymer eine Mooney-Vikosität (ML $_{1+4}$ 100 °C) von 10 bis 200 aufweist.

**15.** Zusammensetzung nach einem der Ansprüche 11 bis 14, worin die Acrylamidverbindung der Formel (1) im Gemisch mit einer Aminovinylsilanverbindung der allgemeinen Formel (2) verwendet wird:

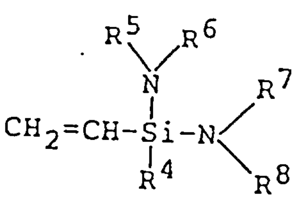

(2)

worin $R^4$, $R^5$, $R^6$, $R^7$ und $R^8$ für eine Alkylgruppe stehen.

## Revendications

**1.** Polymère de diène modifié qu'on obtient par réaction d'un polymère de diène conjugué contenant un métal alcalin avec un composé d'acrylamide de formule générale (1) :

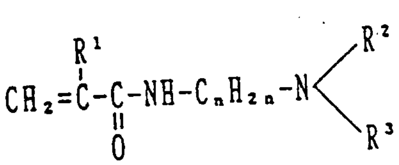

(1)

dans laquelle $R^1$ est un atome d'hydrogène ou un radical méthyle, $R^2$ et $R^3$ représentent chacun un radical alkyle et n est un nombre entier, ledit polymère de diène conjugué contenant un métal alcalin étant un polymère vivant comprenant une extrémité de métal alcalin préparé par polymérisation d'un monomère de diène conjugué ou d'un mélange d'un monomère de diène conjugué et d'un monomère vinylique aromatique au sein d'un solvant hydrocarboné en présence d'un catalyseur à base de métal alcalin, ou un polymère dans lequel on introduit un métal alcalin par une réaction d'addition d'un

polymère de diène portant des motifs de diènes conjugués dans la chaîne polymère et un catalyseur à base de métal alcalin au sein d'un solvant hydrocarboné.

2. Polymère de diène modifié selon la revendication 1, dans lequel ledit composé d'acrylamide est utilisé en une proportion de 0,05 à 10 modes par mode dudit catalyseur à base de métal alcalin employé dans la préparation dudit polymère de diène conjugué contenant le métal adcalin.

3. Polymère de diène modifié selon la revendication 1, dont la consistance Mooney ($ML_{1+4}$ 100 °C) est de 10 à 200.

4. Polymère de diène modifié selon l'une quelconque des revendications 1 à 3, dans lequel ledit composé d'acrylamide de formule (1) est utilisé en mélange avec un composé d'aminovinylsilane de formule générale (2) :

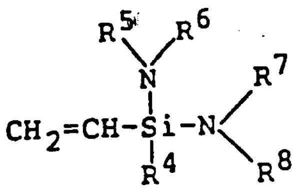

(2)

dans laquelle $R^4$, $R^5$, $R^6$, $R^7$ et $R^8$ représentent chacun un radical alkyle.

5. Procédé de préparation d'un polymère de diène modifié selon la revendication 1, qui consiste à faire réagir un polymère de diène conjugué contenant un métal alcalin avec un composé d'acrylamide de formule générale (1) à titre de modificateur :

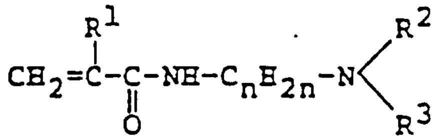

(1)

dans laquelle $R^1$ est un atome d'hydrogène ou un radical méthyle, $R^2$ et $R^3$ représentent chacun un radical alkyle et n est un nombre entier, ledit polymère de diène conjugué contenant un métal alcalin étant un polymère vivant comportant une extrémité de métal alcalin et préparé par polymérisation d'un monomère de diène conjugué ou d'un mélange d'un monomère de diène conjugué et d'un monomère vinylique aromatique au sein d'un solvant hydrocarboné, en présence d'un catalyseur à base de métal alcalin,
ou un polymère dans lequel on introduit un métal alcalin par une réaction d'addition d'un polymère de diène portant des motifs de diène conjugué dans la chaîne polymère et un catalyseur à base de métal alcalin dans un solvant hydrocarboné.

6. Procédé selon la revendication 5, dans lequel ledit modificateur est utilisé à raison de 0,05 à 10 moles par mole dudit catalyseur à base de métal alcalin qu'on utilise dans la préparation dudit polymère de diène conjugué contenant le métal alcalin.

7. Procédé selon la revendication 5, dans lequel ledit catalyseur à base de métal alcalin est choisi dans le groupe comprenant un métal alcalin, un composé hydrocarboné d'un métal alcalin et un complexe d'un métal alcalin avec un composé polaire.

8. Procédé selon la revendication 5, dans lequel ledit polymère de diène conjugué contenant un métal alcalin est sous forme d'une solution dans un solvant hydrocarboné.

9. Procédé selon la revendication 5, dans lequel on effectue la réaction du polymère de diène conjugué contenant le métal alcalin avec le modificateur à une température comprise entre la température

ambiante et 100 °C.

**10.** Procédé selon l'une quelconque des revendications 5 à 9, dans lequel on utilise ledit composé d'acrylamide de formule (1) en mélange avec un composé d'aminovinylsilane de formule générale (2);

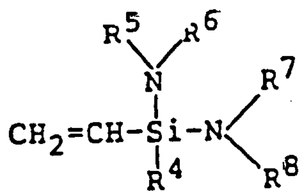

(2)

dans laquelle $R^4$, $R^5$, $R^6$, $R^7$ et $R^8$ représentent chacun un radical alkyle .

**11.** Composition de caoutchouc comprenant un composant caoutchouc qui contient au moins 10% en poids d'un polymère de diène modifié selon la revendication 1, ledit polymère de diène modifié étant un polymère de diène conjugué modifié par réaction d'un polymère de diène conjugué contenant un métal alcalin choisi parmi un polymère vivant comportant une extrémité de métal alcalin et un produit d'addition d'un métal alcalin d'un polymère de diène conjugué avec un composé d'acrylamide de formule générale (1) à titre de modificateur :

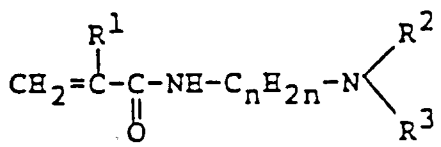

(1)

dans laquelle $R^1$ est un atome d'hydrogène ou un radical méthyle, $R^2$ et $R^3$ représentent chacun un radical alkyle et n est un nombre entier.

**12.** Composition selon la revendication 11, dans laquelle ledit polymère de diène modifié est le produit de modification d'un polymère de diène conjugué choisi dans le groupe comprenant le caoutchouc polybutadiène, le caoutchouc polyisoprène, le caoutchouc copolymère butadiène-isoprène, le caoutchouc copolymère styrène/butadiène, le caoutchouc polypentadiène et le caoutchouc copolymère butadiène/pipérylène.

**13.** Composition selon la revendication 11, dans laquelle ledit polymère de diène modifié est utilisé en combinaison avec un caoutchouc choisi dans le groupe comprenant un copolymère styrène/butadiène polymérisé en émulsion, un polybutadiène polymérisé en solution, un copolymère styrène/butadiène polymérisé en solution, un polyisoprène polymérisé en solution, un copolymère butadiène/isoprène polymérisé en solution et le caoutchouc naturel.

**14.** Composition selon la revendication 11, dans laquelle ledit polymère de diène modifié présente une consistance Mooney ($ML_{1+4}$ 100 °C) de 10 à 200.

**15.** Composition selon l'une quelconque des revendications 11 à 14, dans laquelle le composé d'acrylamide de formule (1) est utilisé en mélange avec un composé d' aminovinylsilane de formule générale (2)

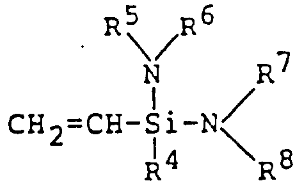

(2)

dans laquelle $R^4$, $R^5$, $R^6$, $R^7$ et $R^8$ représentent chacun un radical alkyle.